Europäisches Patentamt

European Patent Office

Office européen des brevets

(11) Numéro de publication : **0 373 036 B1**

(12) **FASCICULE DE BREVET EUROPEEN**

(45) Date de publication du fascicule du brevet :
**08.03.95 Bulletin 95/10**

(51) Int. Cl.⁶ : **G07B 15/02, G07F 7/02**

(21) Numéro de dépôt : **89403306.7**

(22) Date de dépôt : **29.11.89**

(54) **Procédé de tarification et dispositif en faisant application.**

(30) Priorité : **02.12.88 FR 8815935**

(43) Date de publication de la demande :
**13.06.90 Bulletin 90/24**

(45) Mention de la délivrance du brevet :
**08.03.95 Bulletin 95/10**

(84) Etats contractants désignés :
**ES FR GB IT SE**

(56) Documents cités :
**EP-A- 0 253 240**
**GB-A- 2 142 178**
**GB-A- 2 152 720**

(56) Documents cités :
**US-A- 3 935 933**
**US-A- 4 040 345**
**PATENT ABSTRACTS OF JAPAN vol. 11, no. 129 (P-570)(2576) 23 avril 1987 & JP-A-61 271569**

(73) Titulaire : **MONETEL**
**Rue Claude Chappe**
**F-07500 Granges les Valence (FR)**

(72) Inventeur : **Cailles, Jacques**
**42 Bis rue Edouard Branley**
**F-26000 Valence (FR)**

(74) Mandataire : **Bloch, Gérard et al**
**2, square de l'Avenue du Bois**
**F-75116 Paris (FR)**

Jouve, 18, rue Saint-Denis, 75001 PARIS

## Description

L'invention concerne le domaine du péage, notamment et par exemple le paiement d'un droit de passage, d'un droit de stationnement ou encore d'un droit d'utilisation d'un appareil ou d'un service, plus précisément et en premier lieu un procédé de tarification particulièrement incitatif de ce droit.

Un dispositif de tarification incitative est décrit dans le document GB-A-2 152 720.

Un des buts principaux recherché par les gestionnaires de systèmes de péage est d'en augmenter la rentabilité et l'un des facteurs permettant de l'améliorer est d'accroître la fréquentation qui est le fait d'utilisateurs occasionnels d'une part, et d'utilisateurs habituels d'autre part.

Une tarification attractive vise à atteindre ce but, et à cette fin la présente invention a en premier lieu pour objet un procédé de tarification incitative instituant une véritable dégressivité en fonction de la quantité d'usage.

Un tel procédé s'applique en particulier dans les systèmes tarifaires des transports en commun, et vise principalement la clientèle des habitués, voyageant à l'aide de titres de transport, de type multitrajets, abonnements ou cartes à valeur.

L'invention s'applique particulièrement bien à l'utilisation des titres de type "carte à valeur" à codage magnétique.

Elle renforce de façon évidente les avantages reconnus des systèmes tarifaires traditionnels, que sont la simplicité des opérations de vente, l'existence d'une trésorerie importante liée au prépaiement des titres de transport, et l'économie de personnel générée par la non-intervention des agents du réseau dans les opérations d'auto-oblitération.

Elle rejoint par ailleurs les préoccupations actuelles des exploitants qui visent à obtenir une meilleure connaissance du trafic, davantage de souplesse en matière de modifications tarifaires, une diminution sensible de la fraude, et une certaine vérité des prix.

Le procédé le plus avancé et le plus connu de l'homme du métier consiste à utiliser une carte à mémoire, dont la capacité de calcul et de mémorisation permet, dans un premier temps, de conserver l'historique des trajets effectués, avec toutes leurs caractéristiques, et dans un deuxième temps, d'établir une facture prenant en compte tous les paramètres liés à l'intensité d'usage, de façon à obtenir la dégressivité tarifaire et l'incitation à l'usage.

Mais, outre le fait que l'investissement à consentir pour instaurer un tel système demeure très élevé, les coûts d'exploitation eux-mêmes sont multipliés, par rapport à ce qu'ils sont dans les systèmes traditionnels, par un coefficient très important.

Par ailleurs, l'instauration d'une post-facturation même partielle des services rendus pose des problèmes nouveaux liés au recouvrement des impayés d'une part, et à la forte diminution de la trésorerie d'autre part.

On connaît également, par le document GB-A-2 142 178, un procédé selon le préambule de la revendication 1.

L'invention décrite ci-après vise à pallier les inconvénients précédents, en fournissant un procédé applicable à une billeterie magnétique simple, fiable, parfaitement au point depuis de nombreuses années, immédiatement disponible et économique.

A cet effet, l'invention a pour objet un procédé selon la revendication 1.

Dans un premier cas d'application, décrit ci-dessous à l'aide d'un exemple 1, on recharge le titre normalement périmé d'un nombre d'unités de valeur correspondant à la bonification, et prolongeant d'autant la validité dudit titre.

Dans un second cas d'application décrit ci-dessous à l'aide d'un exemple 2, on transforme le titre périmé en bon de réduction, à valoir au moment de l'acquisition, par le voyageur, du titre suivant.

Le procédé de l'invention permet donc bien d'obtenir, en final, une tarification incitative, instituant une dégressivité du tarif liée au taux d'utilisation constaté, et ceci sans mettre en oeuvre des moyens autres que ceux existant déjà, tout en conservant et en renforçant les avantages reconnus des systèmes tarifaires traditionnels.

La présente invention sera mieux comprise grâce à la description suivante de deux exemples préférés de la mise en oeuvre du procédé de l'invention, faite en référence aux dessins annexés, sur lesquels :
- la figure 1 représente, de façon schématique, un dispositif de validation et de traitement des titres de transport selon l'invention,
- les figures 2 et 3 représentent, de façon détaillée, un organigramme de traitement-titre selon le premier exemple,
- les figures 4 et 5 représentent de façon détaillée un organigramme de traitement-titre selon le second exemple.

Un dispositif de validation et de traitement prévu par exemple pour l'équipement d'un véhicule de transport en commun de type autobus, est maintenant décrit. Ce dispositif est agencé pour avaler, lire, décoder, traiter, relire, imprimer et restituer un titre de transport ; en l'occurrence, il est agencé pour contrôler la validité du titre introduit, et débiter du solde créditeur une valeur correspondant au trajet à effectuer, et ceci jusqu'à épuisement du crédit. Tout titre invalide ou épuisé est refusé, plaçant le voyageur en situation d'irrégularité, cette irrégularité étant par ailleurs, à l'aide du même dispositif, signalée au conducteur en même temps qu'au voyageur.

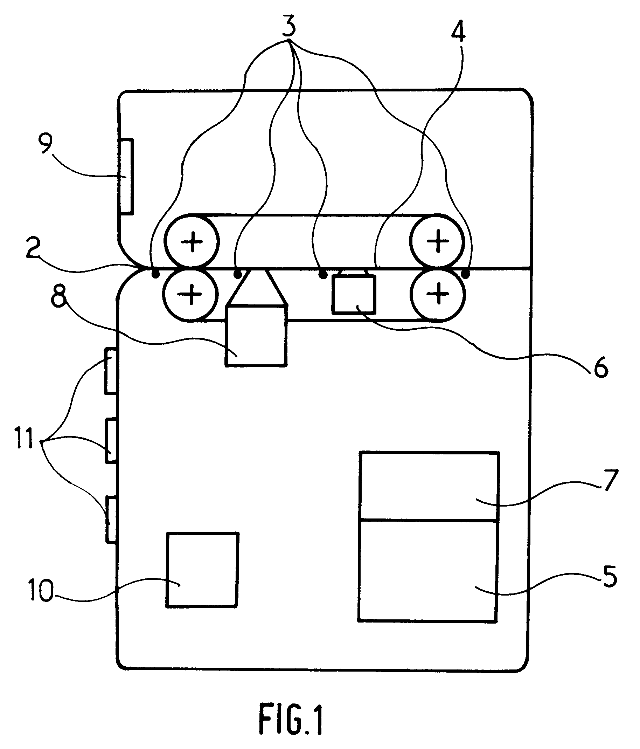

En référence à la figure 1, le dispositif de validation comprend :
- une fente 2 d'introduction et de restitution du titre de transport comprenant une piste magnétique porteuse d'un message,
- des détecteurs de position 3, situés en des points particuliers de la chaîne cinématique d'entraînement 4 du titre,
- une électronique de commande 5 du valideur magnétique,
- au moins une tête magnétique 6 de lecture et d'écriture,
- un microprocesseur 7 et son logiciel de traitement titre,
- une tête d'impression 8,
- au moins un voyant d'affichage 9,
- un dispositif de signalisation acoustique (buzzer) 10,
- un clavier de sélection du nombre de sections 11.

Le dispositif de validation qui vient d'être décrit fonctionne comme suit.

Le voyageur introduit son titre de transport dans la fente 2 ; les détecteurs de position 3, disposés en des points particuliers de la chaîne cinématique 4 d'entraînement déclenchent, par le biais de l'électronique de commande 5 du dispositif, le séquencement des différentes opérations de traitement, de validation, d'affichage, d'impression, éventuellement d'alarmes, et de restitution du titre de transport.

Le passage du titre devant la tête magnétique 6 permet la lecture du message, son décodage, son traitement et son recodage, grâce au microprocesseur 7 et à son logiciel de traitement.

L'invention décrite ici intervient au moment du traitement du message.

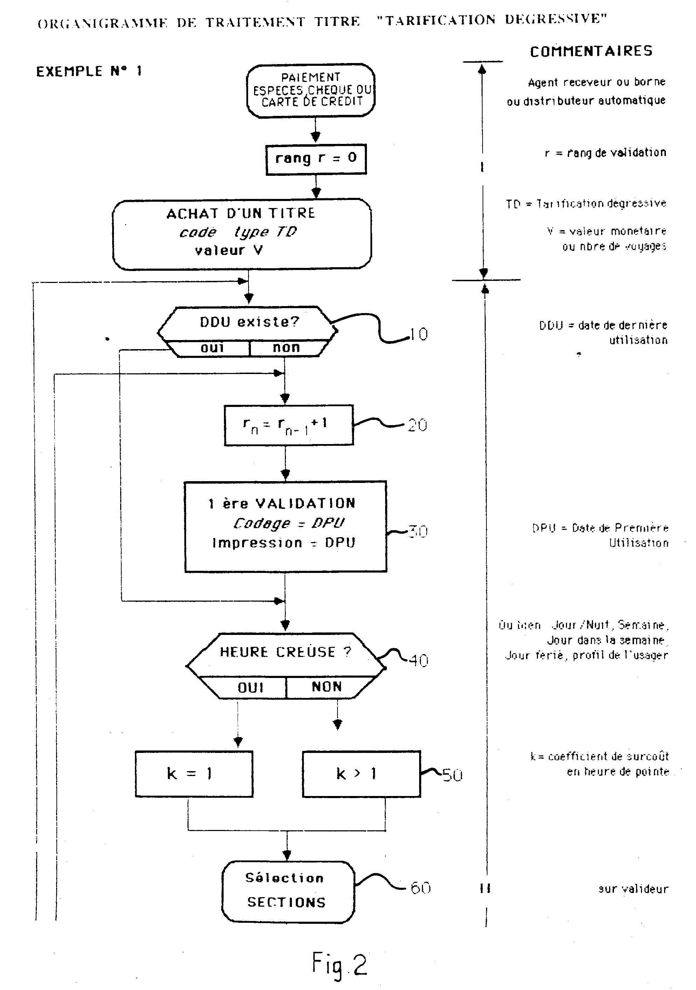

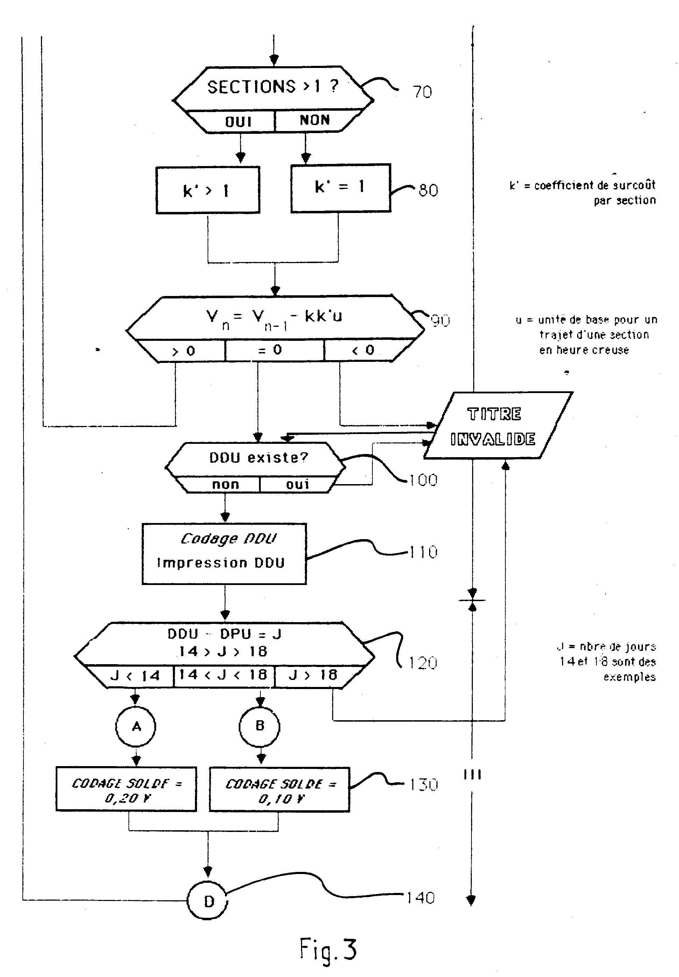

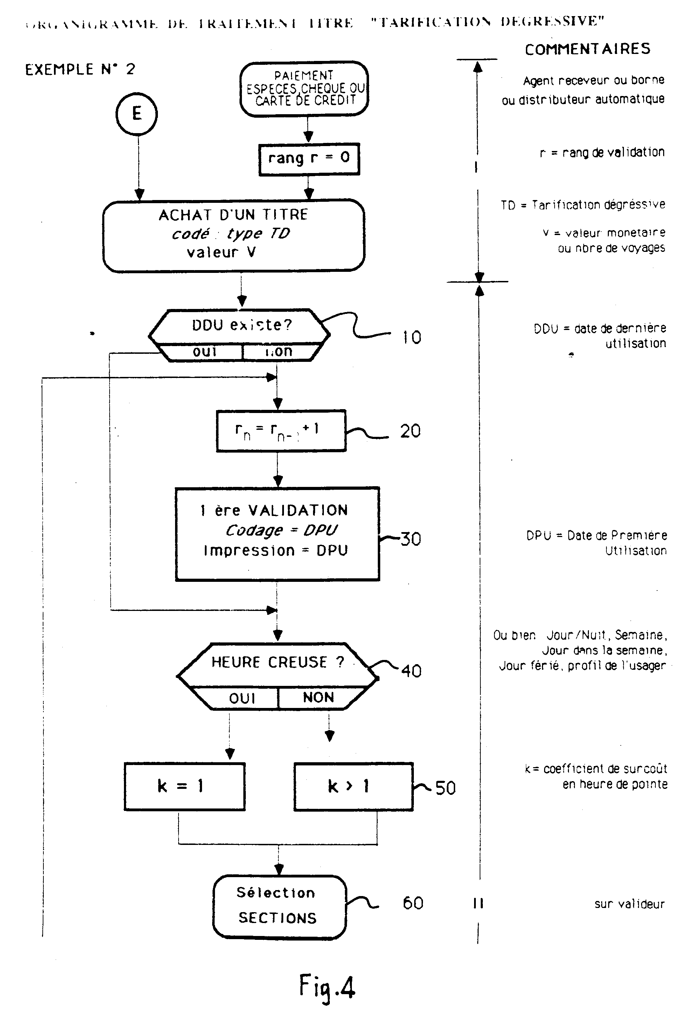

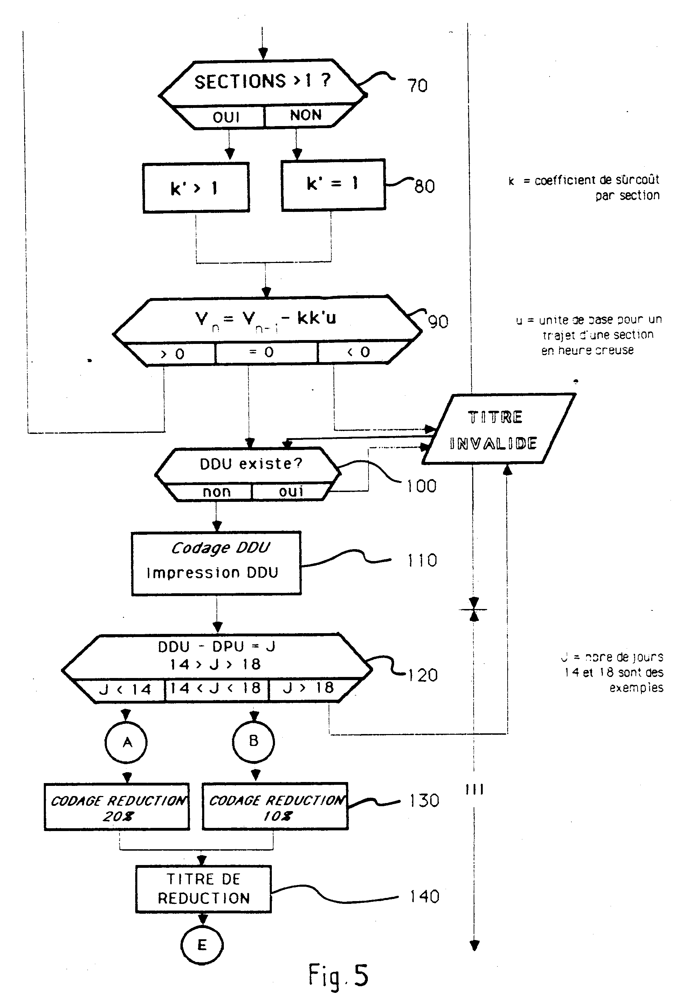

Les organigrammes selon les figures 2, 3, 4 et 5 fournis à titre d'exemples, explicitent les différentes étapes de ce traitement.

Dans le but de bien matérialiser l'invention, ces organigrammes ont été volontairement établis dans le cas où l'exploitant désire introduire, dans sa tarification, un coefficient de surcoût K en heures de pointe, ainsi qu'un coefficient de surcoût K', lié au nombre de sections parcourues.

Il est évident que l'invention proprement dite s'applique quelque soit le nombre et la complexité de telles particularités, laissées à la libre initiative des exploitants et de leurs autorités de tutelle.

Pour les deux exemples d'application 1 et 2 :
- la partie de chaque organigramme notée 1 représente l'achat du titre de transport.

Cet achat peut se faire, soit auprès d'un agent-receveur (au guichet) soit à l'aide d'une borne ou d'un distributeur automatique, les différents modes d'achat se prêtant tous de la même façon à l'invention.
- La partie de chaque organigramme notée II représente l'utilisation du titre de transport, et son traitement par le valideur magnétique
- la partie de chaque organigramme notée III représente la façon dont la bonification éventuellement obtenue bénéficie au voyageur, ainsi :
. dans l'exemple No.1, en rechargeant d'une valeur BONUS le titre normalement périmé,
. dans l'exemple No.2, en transformant le titre périmé en titre de réduction, à valoir au moment de l'achat (zone I) du titre suivant.

Dans l'exemple No.1 :
- l'achat du titre type TD (Tarification Dégressive), de valeur V, s'effectue en payant l'intégralité de cette valeur V (ou son équivalent en monnaie si V est exprimé en unités de valeur différentes, par exemple en nombre de sections, en unités de transport, etc...).

Il faut noter que le moyen de paiement (espèces, chèques, cartes de crédit...) peut être quelconque, et que le rang de validation r (avec r = 0 au moment de l'achat) ne sert qu'aux traitements successifs du titre lors de ses diverses utilisations ultérieures. Ce rang est codé sur le message ; il évolue de + 1 à chaque utilisation, mais le voyageur n'en a pas connaissance.

- l'utilisation du titre de transport s'effectue à l'aide des valideurs magnétiques installés à bord des véhicules de transport.
. Dans une première étape 10, on vérifie l'existence, au sein du message, de la dernière date d'utilisation (DDU). Tant que le titre n'est pas normalement épuisé, DDU n'existe pas, et on code alors le rang de validation suivant :

$$r_n = r_{n-1} + 1 \text{ (étape 20).}$$

. Si DDU existe, on passe directement à l'étape 40.
. Dans une étape 30, et s'il s'agit d'une première utilisation seulement on code et on imprime en clair la date de la première utilisation (DPU).
. Dans une étape 40, on distingue si l'on est en heure creuse ou non.
. Dans une étape 50
- Si l'on est en heure creuse, on établit un premier coefficient K = 1
- Si l'on est pas en heure creuse, on établit un coefficient K > 1

K est un coefficient de surcoût en heure de pointe, hors heures creuses, qui servira au débit ultérieur du titre, lors de l'étape 90.
. Dans une étape 60, le voyageur choisit le nombre de sections qu'il désire parcourir en tapant, par exemple, sur une touche du clavier du valideur.
. Dans une étape 70, on distingue si le nombre de sections choisi est supérieur à 1 ou non ; selon le cas, et dans une étape 80 :
- Si le nombre de sections choisi n'est pas supérieur à 1, on établit un second coefficient K' = 1
- Si le nombre de sections choisi est supérieur à 1 on établit un coefficient K' > 1, lié au nombre de sections de façon paramètrable, et non obligatoirement de façon linéaire.

. Dans une étape 90, on calcule la valeur Vn du solde au rang n :

$$V_n = V_{n-1} - K K' u$$

formule dans laquelle u est la valeur de l'unité de base pour un trajet d'une section en heure creuse, K et K' étant les deux coefficients établis au cours des étapes 50 et 80 ci-dessus.

- Si ce solde $V_n$ est positif, ce qui est le cas tant que le voyageur n'a pas épuisé la valeur nominale V de son titre, le titre est accepté et débité de la valeur K K' u ; puis le traitement proprement dit s'achève, il ne reprendra qu'à l'occasion du trajet suivant, au niveau de l'étape 20.
- Si ce solde n'est ni positif, ni nul, le titre est rejeté comme étant invalide. Le voyageur et le conducteur en sont tous deux informés par des moyens visuels (voyants) et/ou acoustiques (buzzer).

Le voyageur régularise la situation, par exemple en réglant une somme complémentaire auquel cas le conducteur autorise le passage aux étapes suivantes 100 à 140.

- Si ce solde est nul, ce qui arrive lors de l'épuisement normal de la valeur V de départ, on effectue également la boucle des étapes 100 à 140.

. Dans une étape 100, on vérifie l'existence de la date de dernière utilisation (DDU).

- Si DDU existe, on rejette le titre comme étant invalide,
- Si DDU n'existe pas,

. Dans une étape 110, on code sur le message et on imprime en clair cette date.

. Dans une étape 120, on calcule la valeur J de la différence entre les dates de dernière (DDU) et de première (DPU) utilisation :

$$J = DDU - DPU$$

Puis on compare la valeur J obtenue à des valeurs repères (14 et 18 dans l'exemple décrit), préétablies, en nombre et en valeurs, et paramètrables par l'exploitant :

- Si J est supérieur à 18 (par exemple), le titre est rejeté comme étant invalide (pas de bonification dans ce cas-exemple).
- Si J est une valeur comprise entre 14 et 18 (par exemple), ou inférieur à 14, on affecte des valeurs B ou A, correspondant à un bonus d'autant plus important que la valeur J est petite.

Dans l'exemple décrit, et en étape 130 :

. pour J compris entre 14 et 18, la bonification est de 0,10 V, soit 10% de la valeur initiale du titre

. pour J inférieur à 14, la bonification est de 0,20 V, soit 20% de la valeur initiale du titre.

. Dans une étape 140, on code et on imprime une valeur BONUS D correspondante, sur le titre lui-même. Dans ce cas seulement et bien que le titre soit normalement épuisé (voir étape 90), le titre peut être à nouveau utilisé lors de un ou plusieurs trajets, jusqu'à épuisement du BONUS.

Le traitement reprend à l'étape 20, et le titre reste valide tant que son nouveau solde, calculé en étape 90, ne redevienne négatif ou nul, auquel cas le titre est rejeté comme étant définitivement invalide.

Dans l'exemple No.2 :

- l'achat du titre type TD (Tarification Dégressive), de valeur V, s'effectue de façon un peu particulière, dans la mesure où le paiement est perçu :

. pour une partie, par l'acceptation d'un titre de réduction E, physiquement constitué d'un titre périmé qui aurait été transformé, en fin de validité, comme on va le voir dans la description ci-dessous, ou par tout autre support faisant office de titre de réduction

. et pour une partie complémentaire, par tout moyen conventionnel (espèces, chèques, cartes de crédit...). Il faut noter ici également que le moyen de paiement de la partie complémentaire peut être quelconque.

- L'utilisation du titre de transport s'effectue rigoureusement de la même façon que dans l'exemple No.1 décrit ci-dessus, jusqu'à l'étape 120 incluse.

- Dans l'étape 130, les valeurs A et B obtenues à l'étape 120 donnent lieu à un taux de réduction de :

20% pour la valeur A

10% pour la valeur B

- Dans une étape 140, le taux de réduction codé et imprimé sur le titre transforme ce dernier en titre de réduction E, et ce titre de réduction servira, en phase d'achat du titre suivant, en tant que mode de paiement partiel.

Il faut noter que ce titre de réduction peut être physiquement constitué :

- avantageusement du titre de transport périmé lui-même
- mais aussi de tout autre support, créé directement par le valideur lui-même, si celui-ci est du type émetteur de reçu ou de justificatif, ou par le conducteur du véhicule, ou par tout autre moyen.

La nature du support ouvrant droit à réduction n'altère en rien la portée de la présente invention.

Bien que la présente invention ait été décrite dans le cadre de deux exemples particuliers de réalisation ; il est clair cependant qu'elle n'est pas limitée auxdits exemples ; c'est ainsi que l'invention n'est pas limitée au domaine des transports en commun, mais embrasse ceux du péage, du droit de stationnement, du droit d'utilisation d'un appareil ou d'un service ; de la même façon l'invention n'est pas limitée à une billeterie magnétique ; elle s'applique autant à tout système de billeterie supportant des moyens de mémorisation et de traitement, la billeterie magnétique demeurant toutefois, à ce jour, la forme de billeterie la mieux adaptée.

## Revendications

1. Procédé de tarification incitative d'un droit d'usage mettant en oeuvre un titre d'utilisation de type "à valeur" et un dispositif de validation et de traitement du titre à chacune de ses utilisations, ledit titre comprenant des moyens de mémorisation d'une information d'utilisation, ledit prix étant fixé selon un tarif dégressif, procédé comprenant les étapes consistant à encaisser un prix de vente de base lors de l'achat dudit titre d'utilisation et, lors de chaque utilisation du titre, à contrôler sa validité, à décrémenter sa valeur restante de la valeur de l'utilisation concernée et à contrôler que le solde de la valeur du titre est nul ou positif, caractérisé par le fait qu'il comprend en outre les étapes consistant à :
   - enregistrer la date de première utilisation du titre sur le titre lui-même, lors de ladite première utilisation ; et
   - lorsque ledit solde est nul ou négatif :
     . enregistrer sur le titre lui-même la date de dernière utilisation du titre,
     . calculer la durée d'utilisation du titre par différence entre les dates de dernière et de première utilisation du titre,
     . en déduire un taux de bonification d'autant plus élevé que ladite durée à été brève,
     . créditer l'utilisateur de ladite bonification.

2. Procédé selon la revendication 1 dans lequel ladite bonification est créditée à l'utilisateur du titre par rechargement du titre lui-même d'une valeur liée audit taux.

3. Procédé de tarification incitative selon la revendication 1 dans lequel ladite bonification est créditée à l'utilisateur du titre par émission d'un titre complémentaire d'une valeur liée audit taux.

## Patentansprüche

1. Verfahren zur einen Anreiz bietenden Tarifierung einer Benutzungsgebühr unter Verwendung eines Benutzungsausweises von der Art einer Wertkarte und einer Vorrichtung zur Entwertung und Behandlung des Ausweises bei jeder Verwendung desselben, wobei der Ausweis Mittel zum Speichern einer Information über die Verwendung umfaßt und der Preis gemäß einem degressiven Tarif festgesetzt wird, ein Verfahren, welches Schritte umfaßt, die darin bestehen, daß ein Grundverkaufspreis beim Kauf des Benutzungsausweises eingezogen wird und bei jeder Verwendung des Ausweises seine Gültigkeit kontrolliert wird, sein Restwert um den Wert der betreffenden Benutzung vermindert wird und kontrolliert wird, ob der Restbetrag des Werts des Ausweises gleich Null oder positiv ist, dadurch gekennzeichnet, daß es außerdem die folgenden Schritte umfaßt, die darin bestehen, daß:
   - bei der ersten Verwendung das Datum der ersten Verwendung des Ausweises auf dem Ausweis selbst aufgezeichnet wird; und
   - wenn der Restbetrag gleich Null oder negativ ist:
     . auf dem Ausweis selbst das Datum der letzten Verwendung des Ausweises aufgezeichnet wird,
     . die Dauer der Verwendung des Ausweises durch die Differenz zwischen dem Datum der letzten und dem Datum der ersten Verwendung des Ausweises berechnet wird,
     . daraus ein zu vergütender Betrag abgeleitet wird, der umso höher ist, je kürzer die Dauer gewesen ist,
     . dem Benutzer diese Vergütung gutgeschrieben wird.

2. Verfahren nach Anspruch 1, worin die Vergütung dem Benutzer des Ausweises gutgeschrieben wird, indem der Fahrschein selbst mit einem diesem Betrag entsprechenden Wert wiederbeladen wird.

3. Verfahren zur einen Anreiz bietenden Tarifierung nach Anspruch 1, worin die Vergütung dem Benutzer des Ausweises gutgeschrieben wird, indem ein zusätzlicher Ausweis mit einem diesem Betrag entsprechenden Wert ausgegeben wird.

## Claims

1. A process of indicative tariffing of a right of usage employing a usage card of the "value-accredited" type and a device for validating and processing the card on each occasion it is used, the said card comprising means for storing usage data, the said price being fixed according to a sliding scale of charges, a process comprising steps consisting of paying a basic sale price when buying the said usage card and, on each occasion when the card is used, checking its validity, reducing its remaining value by increments of the usage value concerned and checking whether the balance of value of the card is zero or positive, characterised in that it further comprises steps consisting of:
   - registering the date of the first occasion when the card was used on the card itself, at the time of the said first occasion of its use;

and

- when the said balance is zero or negative:
  - registering on the card itself the date of the last occasion when the card was used,
  - calculating the duration of the usage of the card by the difference between the dates of the last and first occasions when the card was used,
  - deducting therefore a bonus rate which is higher when the said duration has been short,
  - accrediting the said bonus to the user.

2. A process according to claim 1 in which the said bonus is accredited to the user of the card by recharging the card itself by a value linked to the said rate.

3. A process of indicative tariffing according to claim 1, in which the said bonus is accredited to the user of the card by issuing an entitlement which is complementary to a value linked to the said rate.

FIG.1

ORGANIGRAMME DE TRAITEMENT TITRE "TARIFICATION DEGRESSIVE"

**COMMENTAIRES**

**EXEMPLE N° 1**

PAIEMENT
ESPECES, CHEQUE OU
CARTE DE CREDIT

Agent receveur ou borne
ou distributeur automatique

rang r = 0

r = rang de validation

ACHAT D'UN TITRE
*code   type TD*
**valeur V**

TD = Tarification dégressive

V = valeur monétaire
ou nbre de voyages

DDU existe? — 10
oui | non

DDU = date de dernière
utilisation

$r_n = r_{n-1} + 1$ — 20

1 ère VALIDATION
*Codage = DPU*
Impression = DPU — 30

DPU = Date de Première
Utilisation

HEURE CREUSE ? — 40
OUI | NON

Ou bien   Jour / Nuit, Semaine,
Jour dans la semaine,
Jour férié, profil de l'usager

k = 1 | k > 1 — 50

k = coefficient de surcoût
en heure de pointe

Sélection
SECTIONS — 60

sur valideur

Fig. 2

8

SECTIONS >1 ? — 70

| OUI | NON |

k' > 1

k' = 1 — 80

k' = coefficient de surcoût par section

$V_n = V_{n-1} - kk'u$ — 90

| > 0 | = 0 | < 0 |

u = unité de base pour un trajet d'une section en heure creuse

TITRE INVALIDE

DDU existe? — 100

| non | oui |

Codage DDU
Impression DDU — 110

DDU − DPU = J
14 > J > 18 — 120

| J < 14 | 14 < J < 18 | J > 18 |

J = nbre de jours
14 et 18 sont des exemples

(A)   (B)

CODAGE SOLDE = 0,20 Y

CODAGE SOLDE = 0,10 Y — 130

III

(D) — 140

Fig. 3

9

ORGANIGRAMME DE TRAITEMENT TITRE   "TARIFICATION DEGRESSIVE"

EXEMPLE N° 2

**COMMENTAIRES**

PAIEMENT
ESPECES,CHEQUE OU
CARTE DE CREDIT

E

Agent receveur ou borne
ou distributeur automatique

rang r = 0

r = rang de validation

ACHAT D'UN TITRE
*codé type TD*
valeur V

TD = Tarification dégréssive

v = valeur monetaire
ou nbre de voyages

DDU existe?  — 10

| oui | non |

DDU = date de dernière
utilisation

$r_n = r_{n-1} + 1$  — 20

1 ère VALIDATION
*Codage = DPU*
Impression = DPU  — 30

DPU = Date de Première
Utilisation

HEURE CREUSE ?  — 40

| OUI | NON |

Ou bien  Jour/Nuit, Semaine,
Jour dans la semaine,
Jour férié, profil de l'usager

k = 1

k > 1  — 50

k = coefficient de surcoût
en heure de pointe

Sélection
SECTIONS  — 60

II

sur valideur

**Fig.4**

10

SECTIONS > 1 ? ~~~ 70

| OUI | NON |

k' > 1

k' = 1 ~~~ 80

k = coefficient de surcoût
par section

$V_n = V_{n-1} - kk'u$ ~~~ 90

| > 0 | = 0 | < 0 |

u = unité de base pour un
trajet d'une section
en heure creuse

TITRE
INVALIDE

DDU existe?

| non | oui | ~~~ 100

Codage DDU
Impression DDU ~~~ 110

DDU - DPU = J
14 > J > 18 ~~~ 120

| J < 14 | 14 < J < 18 | J > 18 |

J = nbre de jours
14 et 18 sont des
exemples

(A)   (B)

CODAGE REDUCTION
20%

CODAGE REDUCTION
10% ~~~ 130

III

TITRE DE
REDUCTION ~~~ 140

(E)

Fig. 5